# EUROPEAN PATENT APPLICATION

(11) **EP 4 818 481 A1**
(43) Date of publication of application: **07.10.2026**
(21) Application number: 26162474.6
(22) Date of filing: 05.03.2026
(51) Int. Cl.: F01D 25/24, F01D 9/04, F01D 11/00

(54) **TURBINE VANE FRAME ASSEMBLY**

(30) Priority: 05.03.2025 US 202563767169 P; 26.08.2025 US 202519309823
(71) Applicant: General Electric Company, Cincinnati, Ohio 45215 (US)
(72) Inventor: BELLEZZA, Christopher, Evendale, 45215 (US); GLYNN, Christopher Charles, Evendale, 45215 (US); TERRY, Michael, Evendale, 45215 (US); FARLEY, Cameron, Evendale, 45215 (US)
(74) Representative: Openshaw & Co.

(57) **Abstract**

A turbine vane frame assembly (200) defining an axial direction, a radial direction, and a circumferential direction includes an outer frame (202) extending from a forward end to an aft end (106, 212, 216, 220, 224), the outer frame (202) including a first connector (234) at the forward end and a second connector (236, 280, 290, 300) at the aft end (106, 212, 216, 220, 224), an outer fairing (204) extending from a forward end to an aft end (106, 212, 216, 220, 224), the outer fairing (204) connected to the outer frame (202) by the first connector (234) and the second connector (236, 280, 290, 300), an inner frame (204, 206) extending from a forward end to an aft end (106, 212, 216, 220, 224), the inner frame (204, 206) including a third connector (238) at the forward end and a fourth connector (240) at the aft end (106, 212, 216, 220, 224), and an inner fairing (208) extending from a forward end to an aft end (106, 212, 216, 220, 224), the inner fairing (208) connected to the inner frame (204, 206) by the third connector (238) and the fourth connector (240), wherein the first connector (234) provides support in the circumferential direction to the outer fairing (204), the second connector (236, 280, 290, 300) provides support in the axial direction to the outer fairing (204), and the fourth connector (240) provides support in both the circumferential direction and axial direction to the inner fairing (208).

## Description

### CROSS-REFERENCE TO RELATED APPLICATIONS

This application is a non-provisional application claiming the benefit of priority under 35 U.S.C. § 119(e) to U.S. Provisional Application No. 63/767,169, filed March 5, 2025, which is hereby incorporated by reference in its entirety.

### FIELD

The present disclosure relates to a turbine vane frame assembly for a gas turbine engine.

### BACKGROUND

A gas turbine engine generally includes a turbomachine and a rotor assembly. Gas turbine engines, such as turbofan engines, may be used for aircraft propulsion. In the case of a turbofan engine, the turbomachine includes a compressor section, a combustion section, and a turbine section in serial flow order, and the rotor assembly is configured as a fan assembly. The turbine section may include both a high pressure turbine and a low pressure turbine downstream of the high pressure turbine.

### BRIEF DESCRIPTION OF THE DRAWINGS

A full and enabling disclosure of the present disclosure, including the best mode thereof, directed to one of ordinary skill in the art, is set forth in the specification, which makes reference to the appended figures, in which:
FIG. 1 is a schematic view of a gas turbine engine according to the present disclosure.
FIG. 2 is a cross-sectional, schematic view of a turbine vane frame assembly according to the present disclosure.
FIG. 3 is a magnified view of a connector of the turbine vane frame assembly according to the present disclosure.
FIG. 4 is another magnified view of a connector of the turbine vane frame assembly according to the present disclosure.
FIG. 5 is another magnified view of a connector of the turbine vane frame assembly according to the present disclosure.
FIG. 6 is another magnified view of a connector of the turbine vane frame assembly according to the present disclosure.

### DETAILED DESCRIPTION

Reference will now be made in detail to present embodiments of the disclosure, one or more examples of which are illustrated in the accompanying drawings. The detailed description uses numerical and letter designations to refer to features in the drawings. Like or similar designations in the drawings and description have been used to refer to like or similar parts of the disclosure.

The word "exemplary" is used herein to mean "serving as an example, instance, or illustration." Any implementation described herein as "exemplary" is not necessarily to be construed as preferred or advantageous over other implementations. Additionally, unless specifically identified otherwise, all embodiments described herein should be considered exemplary.

The singular forms "a", "an", and "the" include plural references unless the context clearly dictates otherwise.

The term "at least one of" in the context of, e.g., "at least one of A, B, and C" refers to only A, only B, only C, or any combination of A, B, and C.

The phrases "from X to Y" and "between X and Y" each refers to a range of values inclusive of the endpoints (i.e., refers to a range of values that includes both X and Y).

The term "adjacent" means "immediately next to" with no other structures in between.

As used herein, a "metal" refers to a pure metal or metal alloy and does not include metal oxides (such as ceramics) or metal salts (such as sodium chloride). A "metallic" part is a part that has at least a portion that includes a metal.

As used herein, "CMC" refers to a class of materials with reinforcing fibers in a ceramic matrix. Generally, the reinforcing fibers provide structural integrity to the ceramic matrix. Some examples of reinforcing fibers can include, but are not limited to, non-oxide silicon-based materials (e.g., silicon carbide, silicon nitride, or mixtures thereof), non-oxide carbon-based materials (e.g., carbon), oxide ceramics (e.g., silicon oxycarbides, silicon oxynitrides, aluminum oxide (Al₂O₃), silicon dioxide (SiO₂), aluminosilicates such as mullite, or mixtures thereof), or mixtures thereof.

Some examples of ceramic matrix materials can include, but are not limited to, non-oxide silicon-based materials (e.g., silicon carbide, silicon nitride, or mixtures thereof), oxide ceramics (e.g., silicon oxycarbides, silicon oxynitrides, aluminum oxide (Al₂O₃), silicon dioxide (SiO₂), aluminosilicates, or mixtures thereof), or mixtures thereof. Optionally, ceramic particles (e.g., oxides of Si, Al, Zr, Y, and combinations thereof) and inorganic fillers (e.g., pyrophyllite, wollastonite, mica, talc, kyanite, and montmorillonite) can also be included within the ceramic matrix.

Generally, particular CMCs can be referred to as their combination of type of fiber/type of matrix. For example, C/SiC for carbon-fiber-reinforced silicon carbide; SiC/SiC for silicon carbide-fiber-reinforced silicon carbide, SiC/SiN for silicon carbide fiber-reinforced silicon nitride; SiC/SiC-SiN for silicon carbide fiber-reinforced silicon carbide/silicon nitride matrix mixture, etc. In other examples, the CMCs can be comprised of a matrix and reinforcing fibers comprising oxide-based materials such as aluminum oxide (Al₂O₃), silicon dioxide (SiO₂), aluminosilicates, and mixtures thereof. Aluminosilicates can include crystalline materials such as mullite (3Al₂O₃•2 SiO₂), as well as glassy aluminosilicates.

In certain non-limiting examples, the reinforcing fibers may be bundled and/or coated prior to inclusion within the ceramic matrix. For example, bundles of the fibers may be formed as a reinforced tape, such as a unidirectional reinforced tape. A plurality of the tapes may be laid up together to form a preform component. The bundles of fibers may be impregnated with a slurry composition prior to forming the preform or after formation of the preform.

The preform may then undergo thermal processing, and subsequent chemical processing to arrive at a component formed of a CMC material having a desired chemical composition. For example, the preform may undergo a cure or burnout to yield a high char residue in the preform, and subsequent melt-infiltration with silicon, or a cure or pyrolysis to yield a silicon carbide matrix in the preform, and subsequent chemical vapor infiltration with silicon carbide. Additional steps may be taken to improve densification of the preform, either before or after chemical vapor infiltration, by injecting it with a liquid resin or polymer followed by a thermal processing step to fill the voids with silicon carbide. CMC material as used herein may be formed using any known or hereinafter developed methods including but not limited to melt infiltration, chemical vapor infiltration, polymer impregnation pyrolysis (PIP), or any combination thereof.

Such materials, along with certain monolithic ceramics (i.e., ceramic materials without a reinforcing material), are particularly suitable for higher temperature applications. Additionally, these ceramic materials are lightweight compared to superalloys, yet can still provide strength and durability to the component made therefrom. Therefore, such materials are currently being considered for many gas turbine components used in higher temperature sections of gas turbine engines, such as airfoils (e.g., turbines, and vanes), combustors, shrouds and other like components, that would benefit from the lighter-weight and higher temperature capability these materials can offer. The present disclosure is generally related to consolidating complex CMC components. Typical lay-up processes use lamination of CMC tapes onto a net shape inner mandrel to form a preform that is enlarged compared to an outer surface of a compaction tool due to layup bulk. Compaction pressure from the tool puts the preform under compressive stress, which may cause microstructural effects.

As used herein, the terms "first," "second," "third," and other ordinals are used to distinguish one component from another and are not intended to signify location or importance of the individual components.

The terms "forward" and "aft" refer to relative positions within a gas turbine engine or vehicle and are based on a normal operational attitude of the gas turbine engine or vehicle. More particularly, forward and aft are used herein with reference to a direction of travel of the vehicle and a direction of propulsive thrust of the gas turbine engine.

The present disclosure is generally related to a turbine section of a gas turbine engine. Specifically, as air flows from a high pressure turbine to a low pressure turbine, one or more vanes provide swirl and other flow characteristics that improve operation of the low pressure turbine. Assemblies that include the vanes in the turbine section may have increased weight and space specifications that increase fuel consumption and reduce overall space availability in the gas turbine engine.

A turbine vane fan assembly positions the vanes between the high pressure turbine and the low pressure turbine to improve airflow in the turbine section. Specifically, the turbine vane fan assembly includes frames and fairings connected to the high pressure turbine and the low pressure turbine that support the vanes. The turbine vane fan assembly may be at least partially formed of a composite material, such as ceramic matrix composite, to reduce overall weight of the turbine section. The turbine vane fan assembly includes specific connectors that connect the frames to the fairings and seal the air in the flowpath. The connectors further connect the frames to the high pressure turbine and to the low pressure turbine. Because the turbine vane fan assembly may include both composite and metallic parts, the parts expand thermally at different rates, which may cause movement of the composite parts relative to the metallic parts. The connectors reduce or inhibit the movement of the composite parts and reduce or inhibit leaking of the air from the flowpath. In particular, the connectors provide support in the axial and circumferential directions where thermal mismatch may cause different movement of the composite parts and the metallic parts.

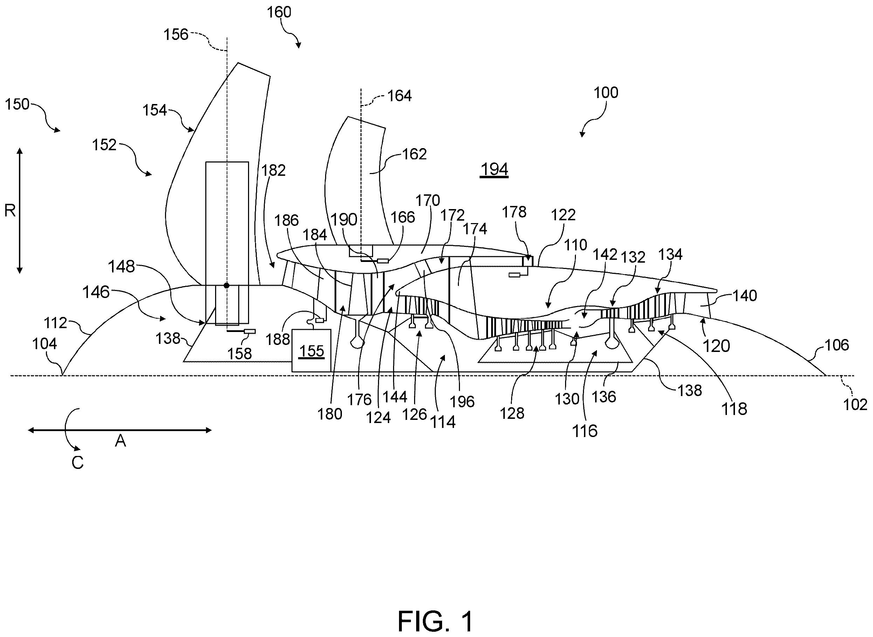

Referring now to the drawings, wherein identical numerals indicate the same elements throughout the figures, FIG. 1 is a schematic cross-sectional view of a gas turbine engine 100 in accordance with an embodiment of the present disclosure. Particularly, FIG. 1 provides a gas turbine engine having a rotor assembly with a single stage of unducted rotor blades. In such a manner, the rotor assembly may be referred to herein as an "unducted fan," or the entire engine 100 may be referred to as an open rotor engine. In addition, the gas turbine engine 100 of FIG. 1 includes a third stream extending from the compressor section to a rotor assembly flow path over the turbomachine, as will be explained in more detail below.

For reference, the gas turbine engine 100 defines an axial direction A, a radial direction R, and a circumferential direction C. Moreover, the gas turbine engine 100 defines an axial centerline 102 that extends along the axial direction A. In general, the axial direction A extends parallel to the axial centerline 102, the radial direction R extends outward from and inward to the axial centerline 102 in a direction orthogonal to the axial direction A, and the circumferential direction extends three hundred sixty degrees (360°) around the axial centerline 102. The gas turbine engine 100 extends between a forward end 104 and an aft end 106, e.g., along the axial direction A.

The gas turbine engine 100 includes a turbomachine 110, a spinner 112, and a fan section 150. Generally, the turbomachine 110 includes, in serial flow order, a compressor section 114, a combustion section 116, a turbine section 118, and an exhaust section 120. Particularly, as shown in FIG. 1, the turbomachine 110 includes a core cowl 122 that defines an annular core inlet 124. The core cowl 122 further encloses at least in part a low pressure system and a high pressure system. For example, the core cowl 122 depicted encloses and supports at least in part a booster or low pressure ("LP") compressor 126 of the compressor section 114 for pressurizing the air that enters the turbomachine 110 through core inlet 124. A high pressure ("HP"), multi-stage, axial-flow compressor 128 of the compressor section 114 receives pressurized air from the LP compressor 126 and further increases the pressure of the air. The pressurized air stream flows downstream to a combustor 130 of the combustion section 116 where fuel is injected into the pressurized air stream and ignited to raise the temperature and energy level of the pressurized air.

It will be appreciated that as used herein, the terms "high/low speed" and "high/low pressure" are used with respect to the high pressure/high speed system and low pressure/low speed system interchangeably. Further, it will be appreciated that the terms "high" and "low" are used in this same context to distinguish the two systems and are not meant to imply any absolute speed or pressure values.

The high energy combustion products flow from the combustor 130 downstream to an HP turbine 132 of the turbine section 118. The HP turbine 132 drives the HP compressor 128 through a high pressure shaft 136. In this regard, the HP turbine 132 is drivingly coupled with the HP compressor 128. The high energy combustion products then flow to an LP turbine 134 of the turbine section 118. The LP turbine 134 drives the LP compressor 126 and components of the fan section 150 through an LP shaft 138. In this regard, the LP turbine 134 is drivingly coupled with the LP compressor 126 and components of the fan section 150. The LP shaft 138 is coaxial with the HP shaft 136 in this example embodiment. After driving each of the HP and LP turbines 132, 134, the combustion products exit the turbomachine 110 through a turbomachine exhaust nozzle 140 of the exhaust section 120.

Accordingly, the turbomachine 110 defines a working gas flow path or core duct 142 that extends between the core inlet 124 and the turbomachine exhaust nozzle 140. The core duct 142 is an annular duct positioned generally inward of the core cowl 122 along the radial direction R.

The fan section 150 includes a fan 152, which is the primary fan in this example embodiment. For the depicted embodiment of FIG. 1, the fan 152 is an open rotor or unducted fan 152. In such a manner, the gas turbine engine 100 may be referred to as an open rotor engine.

As depicted, the fan 152 includes an array of fan blades 154 (only one shown in FIG. 1). The fan blades 154 are rotatable, e.g., about the axial centerline 102. As noted above, the fan 152 and the spinner 112 are drivingly coupled with the LP turbine 134 via the LP shaft 138. For the embodiments shown in FIG. 1, the fan 152 is coupled with the LP shaft 138 via a gearbox 155 that is a speed reduction gearbox, e.g., in an indirect-drive or geared-drive configuration.

It will be appreciated that the fan blades 154 may be configured to be composite fan blades, e.g., formed in whole or in part of a composite material. The term composite material as used herein may be defined as a material containing a reinforcement such as fibers or particles supported in a binder or matrix material. Composites include metallic and non-metallic composites.

Moreover, the array of fan blades 154 can be arranged in equal spacing around the axial centerline 102. Each fan blade 154 has a root and a tip and a span defined therebetween. Each fan blade 154 defines a central blade axis 156. For this embodiment, each fan blade 154 of the fan 152 is rotatable about its central blade axis 156, e.g., in unison with one another. One or more actuators 158 are provided to facilitate such rotation and therefore may be used to change a pitch of the fan blades 154 about their respective central blades' axes 156.

As depicted, it will be appreciated that the fan section 150 includes a variable pitch fan assembly 146 and a disk 148 having a plurality of disk segments arranged in a spaced apart manner. The variable pitch fan assembly 146 is coupled to the disk 148, comprising a trunnion coupled to the disk 148 and the fan blade 154. The disk 148 has a generally annular shape about the axial direction A. Further, the fan blades 154 extend outwardly from the disk 148 generally along the radial direction R. Each fan blade 154 is also rotatable relative to the disk 148 about the central blade axis 156 by virtue of the fan blades 154 being operatively coupled to the actuator(s) 158 configured to collectively vary the pitch of the fan blades 154, e.g., in unison.

The fan section 150 further includes a fan guide vane array 160 that includes fan guide vanes 162 (only one shown in FIG. 1) disposed around the axial centerline 102. For this embodiment, the fan guide vanes 162 are not rotatable about the axial centerline 102. Each fan guide vane 162 has a root and a tip and a span defined therebetween. The fan guide vanes 162 may be unshrouded, as shown in FIG. 1 or, alternatively, may be shrouded, e.g., by an annular shroud spaced outward from the tips of the fan guide vanes 162 along the radial direction R or attached to the fan guide vanes 162.

Each fan guide vane 162 defines a central blade axis 164. For this embodiment, each fan guide vane 162 of the fan guide vane array 160 is rotatable about its respective central blade axis 164, e.g., in unison with one another. One or more actuators 166 are provided to facilitate such rotation and, therefore, may be used to change a pitch of the fan guide vane 162 about its respective central blade axis 164. However, in other embodiments, each fan guide vane 162 may be fixed or unable to be pitched about its central blade axis 164. The fan guide vanes 162 are mounted to a fan cowl 170.

As shown in FIG. 1, in addition to the fan 152, which is unducted, a ducted fan 184 is included aft of the fan 152, such that the gas turbine engine 100 includes both a ducted and an unducted fan which both serve to generate thrust through the movement of air without passage through at least a portion of the turbomachine 110 (e.g., without passage through the HP compressor 128 and combustion section 116 for the embodiment depicted). The ducted fan 184 is rotatable about the same axis (e.g., the axial centerline 102) as the fan blade 154. The ducted fan 184 is, for the embodiment depicted, driven by the low pressure turbine 134 (e.g., coupled to the LP shaft 138). In the embodiment depicted, as noted above, the fan 152 may be referred to as the primary fan, and the ducted fan 184 may be referred to as a secondary fan. It will be appreciated that these terms "primary" and "secondary" are terms of convenience, and do not imply any particular importance, power, or the like.

The ducted fan 184 includes a plurality of fan blades (not separately labeled in FIG. 1) arranged in a single stage, such that the ducted fan 184 may be referred to as a single stage fan. The fan blades of the ducted fan 184 can be arranged in equal spacing around the axial centerline 102. Each blade of the ducted fan 184 has a root and a tip and a span defined therebetween.

The fan cowl 170 annularly encases at least a portion of the core cowl 122 and is generally positioned outward of at least a portion of the core cowl 122 along the radial direction R. Particularly, a downstream section of the fan cowl 170 extends over a forward portion of the core cowl 122 to define a fan duct flow path, or simply a fan duct 172. According to this embodiment, the fan flow path or fan duct 172 may be understood as forming at least a portion of the third stream of the gas turbine engine 100.

Incoming air may enter through the fan duct 172, through a fan duct inlet 176, and may exit through a fan exhaust nozzle 178 to produce propulsive thrust. The fan duct 172 is an annular duct positioned generally outward of the core duct 142 along the radial direction R. The fan cowl 170 and the core cowl 122 are connected together and supported by a plurality of substantially radially extending, circumferentially spaced stationary struts 174 (only one shown in FIG. 1). The stationary struts 174 may each be aerodynamically contoured to direct air flowing thereby. Other struts in addition to the stationary struts 174 may be used to connect and support the fan cowl 170 or core cowl 122. In many embodiments, the fan duct 172 and the core duct 142 may at least partially co-extend (generally axially) on opposite sides (e.g., opposite radial sides) of the core cowl 122. For example, the fan duct 172 and the core duct 142 may each extend directly from a leading edge 144 of the core cowl 122 and may partially co-extend generally axially on opposite radial sides of the core cowl 122.

The gas turbine engine 100 also defines or includes an inlet duct 180. The inlet duct 180 extends between an engine inlet 182 and the core inlet 124/fan duct inlet 176. The engine inlet 182 is defined generally at the forward end of the fan cowl 170 and is positioned between the fan 152 and the fan guide vane array 160 along the axial direction A. The inlet duct 180 is an annular duct that is positioned inward of the fan cowl 170 along the radial direction R. Air flowing downstream along the inlet duct 180 is split, not necessarily evenly, into the core duct 142 and the fan duct 172 by a fan duct splitter or leading edge 144 of the core cowl 122. In the embodiment depicted, the inlet duct 180 is wider than the core duct 142 along the radial direction R. The inlet duct 180 is also wider than the fan duct 172 along the radial direction R.

Notably, for the embodiment depicted, the gas turbine engine 100 further includes an array of inlet guide vanes 186 positioned in the inlet duct 180 upstream of the ducted fan 184 and downstream of the engine inlet 182. The array of inlet guide vanes 186 are arranged around the axial centerline 102. For this embodiment, the inlet guide vanes 186 are not rotatable about the axial centerline 102. Each inlet guide vane 186 defines a central blade axis (not labeled for clarity), and is rotatable about its respective central blade axis, e.g., in unison with one another. In such a manner, the inlet guide vanes 186 may be considered a variable geometry component. One or more actuators 188 are provided to facilitate such rotation and therefore may be used to change a pitch of the inlet guide vanes 186 about their respective central blade axes. However, in other embodiments, each inlet guide vanes 186 may be fixed or unable to be pitched about its central blade axis.

Further, located downstream of the ducted fan 184 and upstream of the fan duct inlet 176, the gas turbine engine 100 includes an array of outlet guide vanes (OGVs) 190. As with the array of inlet guide vanes 186, the array of outlet guide vanes 190 are not rotatable about the axial centerline 102. However, for the embodiment depicted, unlike the array of inlet guide vanes 186, the array of outlet guide vanes 190 are configured as fixed-pitch outlet guide vanes.

Further, it will be appreciated that for the embodiment depicted, the fan exhaust nozzle 178 of the fan duct 172 is further configured as a variable geometry exhaust nozzle. In such a manner, the gas turbine engine 100 includes one or more actuators 158 for modulating the variable geometry exhaust nozzle. For example, the variable geometry exhaust nozzle may be configured to vary a total cross-sectional area (e.g., an area of the nozzle in a plane perpendicular to the axial centerline 102) to modulate an amount of thrust generated based on one or more engine operating conditions (e.g., temperature, pressure, mass flowrate, etc. of an airflow through the fan duct 172). A fixed geometry exhaust nozzle may also be adopted.

The gas turbine engine 100, as noted above includes a primary fan, or rather the fan 152 having fan blades 154, and a secondary fan, or rather the ducted fan 184 having fan blades. Airflow from the fan 152 is split between a bypass passage 194 and the inlet duct 180 by an inlet splitter. Airflow from the ducted fan 184 is split between the fan duct 172 and the core duct 142 by the leading edge 144 (sometimes also referred to as a fan duct splitter). The gas turbine engine 100 in such a form defines a "first" stream through the bypass passage 194, a "second" stream through the core duct 142, and a "third" stream through the fan duct 172.

Moreover, referring still to FIG. 1, in exemplary embodiments, air passing through the fan duct 172 may be relatively cooler (e.g., lower temperature) than one or more fluids utilized in the turbomachine 110. In this way, one or more heat exchangers 196 may be positioned in thermal communication with the fan duct 172. For example, one or more heat exchangers 196 may be disposed within the fan duct 172 and utilized to cool one or more fluids from the core engine with the air passing through the fan duct 172, as a resource for removing heat from a fluid, e.g., compressor bleed air, oil, or fuel.

Although not depicted, the heat exchanger 196 may be an annular heat exchanger extending substantially 360 degrees in the fan duct 172 (e.g., at least 300 degrees, such as at least 330 degrees). In such a manner, the heat exchanger 196 may effectively utilize the air passing through the fan duct 172 to cool one or more systems of the gas turbine engine 100 (e.g., lubrication oil systems, compressor bleed air, electrical components, etc.). The heat exchanger 196 uses the air passing through the fan duct 172 as a heat sink and correspondingly increases the temperature of the air downstream of the heat exchanger 196 exiting the fan exhaust nozzle 178.

As described in further detail below, the gas turbine engine 100 includes a turbine vane frame assembly 200. The turbine vane frame assembly 200 is disposed between the HP turbine 132 and the LP turbine 134. Specifically, the turbine vane frame assembly 200 directs air from the HP turbine 132 to the LP turbine 134.

It should be appreciated that the gas turbine engine 100 depicted in FIG. 1 and described herein is by way of example only, and that embodiments of the present disclosure may be incorporated in other gas turbine engines as well (such as a ducted turbofan engine).

It will be appreciated, however, that the exemplary engine 100 is provided by way of example only. In other exemplary embodiments, the gas turbine engine 100 may have any other configuration. For example, in other exemplary embodiments, the turbomachine 110 may have any other number and arrangement of shafts, spools, compressors, turbines, etc. Further, in other exemplary embodiments, the gas turbine engine 100 may alternatively be configured as a ducted turbofan engine (including an outer nacelle surrounding the fan 152 and a portion of the turbomachine 110); as a direct drive gas turbine engine (may not include a reduction gearbox, such as gearbox 155); as a two-stream gas turbine engine (may not include the fan duct 172); etc.

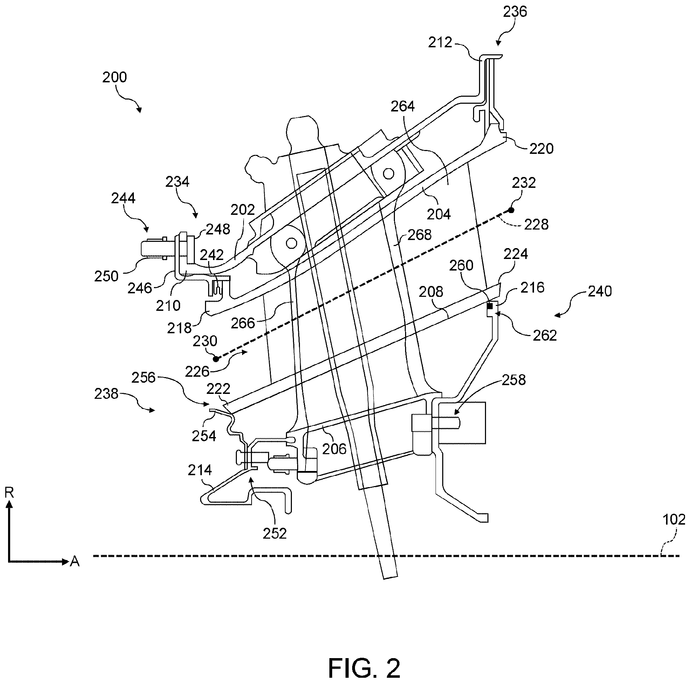

Now referring to FIG. 2, a schematic view of a turbine vane frame assembly 200 is provided. The turbine vane frame assembly 200 includes components that support a vane disposed between a high pressure turbine 132 and a low pressure turbine 134. In particular, the turbine vane frame assembly 200 improves flow from the HP turbine 132 to the LP turbine 134 while addressing space constraints in the gas turbine engine 100.

The turbine vane frame assembly 200 includes an outer frame 202, an outer fairing 204, an inner frame 206, and an inner fairing 208. The outer frame 202 extends from a forward end 210 to an aft end 212, and the inner frame 206 extends from a forward end 214 to an aft end 216. The outer fairing 204 extends from a forward end 218 to an aft end 220, and the inner fairing 208 extends from a forward end 222 to an aft end 224. The outer frame 202 supports the outer fairing 204, and the outer fairing 204 provides a smooth flow surface for air flowing between the HP turbine 132 and the LP turbine 134. The inner frame 206 supports the inner fairing 208, and the inner fairing 208 provides a smooth flow surface for air flowing between the HP turbine 132 and the LP turbine 134. That is, the outer fairing 204 and the inner fairing 208 define a flowpath 226 from the HP turbine 132 to the LP turbine 134.

In particular, the turbine vane frame assembly 200 defines an assembly centerline 228 between the outer fairing 204 and the inner fairing 208. The assembly centerline 228 extends from a first end 230 to a second end 232. The first end 230 is defined as the forwardmost common axial position of the outer fairing 204 and the inner fairing 208, and the second end 232 is defined as the aftmost common axial position of the outer fairing 204 and the inner fairing 208. The aft ends 220, 224 of outer fairing 204 and the inner fairing 208 extend outward in the radial direction R relative to the forward ends 218, 222 of the outer fairing 204 and the inner fairing 208, and thus the second end 232 of the assembly centerline 228 is outward in the radial direction R of the first end 230 of the assembly centerline 228. In such a form, the assembly centerline 228 is angled outward relative to the centerline 102 of the gas turbine engine 100, which drives air radially outward from the HP turbine 132 to the LP turbine 134. The radially outward movement of the air accommodates for the larger blade size of the LP turbine 134 relative to the blade size of the HP turbine 132 and improves efficiency of operation of the LP turbine 134 by allowing more extraction of power from the air.

The outer frame 202 includes a first connector 234 at the forward end 210 and a second connector 236 at the aft end 212. The first connector 234 connects the forward end 218 of the outer fairing 204 to the forward end 210 of the outer frame 202, adjacent to the HP turbine 132, and the second connector 236 connects the aft end 220 of the outer fairing 204 to the aft end 212 of the outer frame 202, adjacent to the LP turbine 134. The outer fame 202 is constructed of metal, and the outer fairing 204 is constructed of a CMC. The first connector 234 reduces circumferential movement of the outer fairing 204 from thermal expansion, and the second connector 236 reduces axial movement of the outer fairing 204. That is, because the outer frame 202 is metal and the outer fairing 204 is CMC, the outer fairing 204 and the outer frame 202 may expand different amounts when heated. The mismatch in thermal expansion causes the outer fairing 204 to move relative to the outer frame 202, and the first and second connectors 234, 236 reduce or inhibit the movement from the thermal mismatch. In such a form, the first connector 234 provides support in the circumferential direction C to the outer fairing 204 and the second connector 236 provides support in the axial direction A to the outer fairing 204.

The inner frame 206 includes a third connector 238 at the forward end 214 and a fourth connector 240 at the aft end 216. The third connector 238 seals the forward end 222 of the inner fairing 208 to the forward end 214 of the inner frame 206, adjacent to the HP turbine 132, and the fourth connector 240 connects the aft end 224 of the inner fairing 208 to the aft end 216 of the inner frame 206, adjacent to the LP turbine 134 (FIG. 1). In particular, the fourth connector 240 reduces circumferential and axial movement of the aft end 224 of the inner fairing 208. The inner frame 206 is constructed of metal and the inner fairing 208 is constructed of a CMC. As described above with reference to the outer frame 202 and the outer fairing 204, the different expansions from the thermal mismatch between the inner frame 206 and the inner fairing 208 may cause radial and axial movement of the inner fairing 208. In such a form, the third connector allows 238 for movement of the inner fairing 208 relative to the inner frame 206 in the axial direction A and in the radial direction R while the fourth connector 240 provides support in the radial direction R, the circumferential direction C, and the axial direction A to the inner fairing 208.

The first connector 234 may include a W-seal 242. In this context, a "W-seal" is a structure with a sinuous component that flexes to seal a gap between the outer fairing 204 and the outer frame 202. In some forms, the W-seal 242 approximates the shape of the letter "W," and it will be appreciated that the term "M-seal" may also be used because the structure may also approximate the shape of the letter "M" in different orientations. The W-seal 242 extends from the forward end 210 of the outer frame 202 to the forward end 218 of the outer fairing 204.

The first connector 234 may include a bolted joint 244 and a flange 246. The bolted joint 244 is arranged to connect the outer frame 202 to the outer fairing 204. Specifically, the bolted joint 244 includes a pin 248 that extends through the outer frame 202 to a securing device 250 (such as a nut) that secures the pin 248. The flange 246 is fixed by the bolted joint 244 to reduce or inhibit movement in the radial direction R that may occur from thermal expansion. In particular, the flange 246 engages the forward end 218 of the outer fairing 204, and the W-seal 242 extends between the flange 246 and the outer fairing 204 to reduce or inhibit air flowing from the flowpath 226 toward the outer frame 202.

The second connector 236 connects the aft end 212 of the outer frame 202 to the aft end 220 of the outer fairing 204. As described in further detail below, the second connector 236 may have one or more different configurations, such as including at least one of a leaf seal, a reaction member, a braided rope seal, a piston ring seal, or a W-seal. The specific configuration and components of the second connector 236 may be determined to accommodate space and weight constraints of the turbine vane frame assembly 200.

The third connector 238 connects the forward end 214 of the inner frame 206 to the forward end 222 of the inner fairing 208. In particular, the third connector 238 may include a bolted joint 252 arranged to connect the inner frame 206 to the inner fairing 208 and a leaf seal 254. The leaf seal 254 is a curved structure that flexes to seal a gap 256 between the inner frame 206 and the inner fairing 208. Specifically, the leaf seal 254 flexes aft in the axial direction A to close the gap 256, reducing or inhibiting air from the flowpath 226 from reaching the inner frame 206. The interface between the forward end 214 of the inner frame 206 and the forward end 222 of the inner fairing 208 may have few to no induced forces during thermal expansion, so the third connector 238 primarily provides a sealing function.

The fourth connector 240 connects the aft end 216 of the inner frame 206 to the aft end 224 of the inner fairing 208. The fourth connector 240 includes at least one of a bolted joint 258 or a W-seal 260. The bolted joint 258 is arranged to connect the inner frame 206 to the inner fairing 208. Specifically, the bolted joint 258 reduces or inhibits movement in the axial direction A and the radial direction R from thermal expansion of the inner fairing 208. The W-seal 260 is disposed in a gap 262 between the inner frame 206 and the inner fairing 208, reducing or inhibiting air from the flowpath 226 from reaching the inner frame 206. In such a form, the fourth connector 240 provides both a sealing function and a reaction function for the inner fairing 208.

The turbine vane frame assembly 200 includes an airfoil 264. The airfoil 264 extends between the outer fairing 204 and the inner fairing 208. Specifically, the airfoil 264 extends into the flowpath 226, directing air from the HP turbine 132 to the LP turbine 134. The airfoil 264 may be integral with the outer fairing 204 and the inner fairing 208, i.e., formed together in a same manufacturing step to form a monolithic structure. Alternatively, the airfoil 264 may be formed separately from the outer fairing 204 and the inner fairing 208 and joined in a later manufacturing step. It will be appreciated that the airfoil 264 is one of a plurality of airfoils of the turbine vane frame assembly 200, the plurality of airfoils distributed circumferentially about the axial centerline 102.

The turbine vane frame assembly 200 includes at least one structural extension 266. The structural extension 266 is coupled to the outer frame 202 and the inner frame 206. Specifically, the structural extension 266 extends through the airfoil 264 to provide support for other components of the turbine vane frame assembly 200. The turbine vane frame assembly 200 may include a plurality of structural extensions, including a second structural extension 268 as shown in FIG. 2.

The outer frame 202, the inner frame 206, and the structural extensions 266, 268 are formed of a metal material, such as steel or aluminum. The outer fairing 204, the inner fairing 208, and the airfoil 264 are formed of a composite material, such as a ceramic matrix composite (CMC). By using CMC, the overall weight of the turbine vane frame assembly 200 is reduced, which reduces fuel consumption by the gas turbine engine 100.

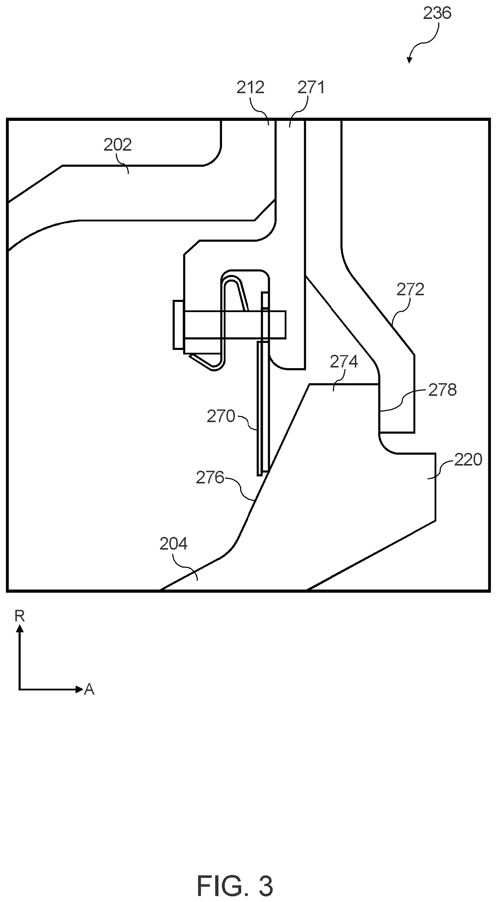

With reference to FIG. 3, a magnified view of the second connector 236 is provided. The second connector 236 includes a leaf seal 270, a leaf seal support 271, and a reaction member 272. As described above, the leaf seal 270 is a flexible structure that urges the outer frame 202 aft in the axial direction A. The leaf seal support 271 is disposed between the outer frame 202 and the reaction member 272 to hold the leaf seal 270. The reaction member 272 is a flange or other elongated structure extending from the aft end 212 of the outer frame 202 to the aft end 220 of the outer fairing 204. Specifically, the outer fairing 204 includes a tab 274 at the aft end 220, the tab 274 including a forward face 276 and an aft face 278. The leaf seal 270 engages the forward face 276 of the tab 274 and the reaction member 272 engages the aft face 278 of the tab 274. As such, the second connector 236 sandwiches (e.g., clamps, constrains) the tab 274 therebetween, reducing or inhibiting axial movement of the tab 274 (and the remainder of the outer fairing 204). The leaf seal 270 is connected to the leaf seal support 271 by any suitable fastener, such as a bolt, a press-fit pin, a threaded rod, or combinations thereof. Using the leaf seal 270 reduces the overall size of the second connector 236, addressing space constraints. In such a form, the second connector 236 provides both a sealing function and a reaction function for the outer fairing 204.

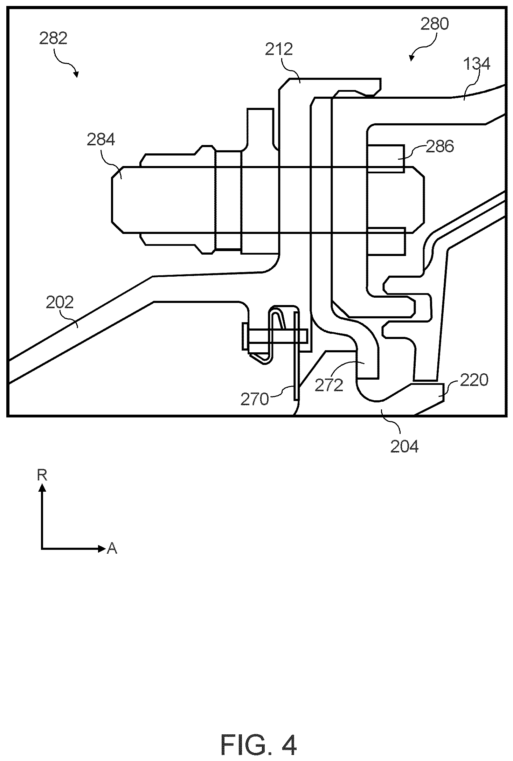

With reference to FIG. 4, a magnified view of another second connector 280 is provided. The second connector 280 can be implemented as the second connector 236 of FIG. 2. The second connector 280 includes the leaf seal 270, the reaction member 272, and a joint 282 connecting the aft end 212 of the outer frame 202 to the LP turbine 134. As with the second connector 236 of FIG. 3, the leaf seal 270 reduces the overall size of the second connector 280, addressing space constraints. Additionally, the second connector 280 lacks the leaf seal support 271, and the leaf seal 270 is supported directly by the outer frame 202.

The joint 282 fixes the outer frame 202 to the LP turbine 134. Specifically, the joint 282 includes a pin 284 that extends through the outer frame 202 and the LP turbine 134 and a securing device 286 that holds the pin 284 against the LP turbine 134. The securing device 286 may be any suitable type, such as a nut, a collar, a fastner, or combinations thereof. The joint 282 further reduces or inhibits movement of the outer fairing 204 in the axial direction A by expansion from the thermal mismatch between the outer frame 202 and the outer fairing 204. In such a form, the second connector 280 provides both a sealing function and a reaction function for the outer fairing 204.

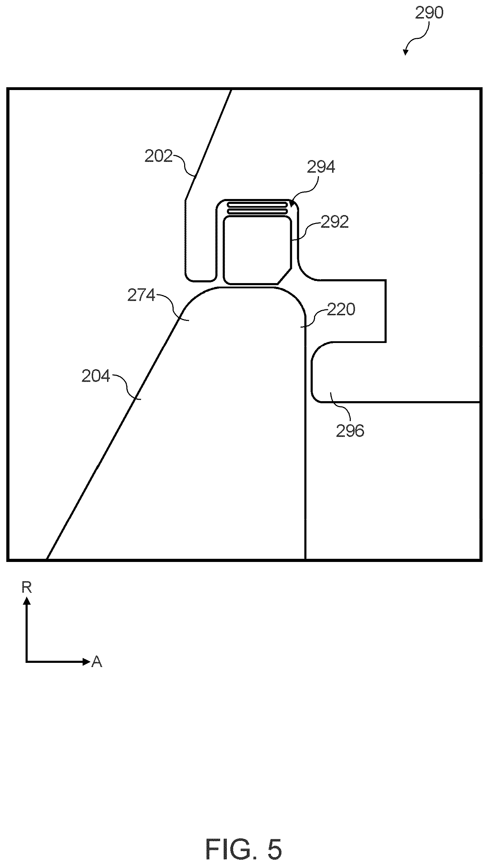

Now referring to FIG. 5, a magnified view of another second connector 290 is provided. The second connector 290 can be implemented as the second connector 236 of FIG. 2. The second connector 290 includes a piston ring seal 292. Specifically, the tab 274 of the outer fairing 204 defines a gap 294 with the outer frame 202, and the piston ring seal 292 is disposed in the gap 294. The piston ring seal 292 may be used when movement in the axial direction A is low and the sealing function of the second connector 290 is more desirable. By using the piston ring seal 292, the overall size of the second connector 290 is reduced, addressing space constraints.

In such a form, the outer frame 202 reduces or inhibits movement of the outer fairing 204 in the axial direction A. Specifically, the outer frame 202 may include a flange 296 aft engaging the aft end 220 of the outer fairing 204, the flange 296 resisting movement of the outer fairing 204 aft in the axial direction A. The movement of the outer fairing 204 is typically aft in the axial direction A, so the outer frame 202 may have few or no structures that reduce or inhibit movement of the outer fairing 204 forward in the axial direction A, further addressing space constraints.

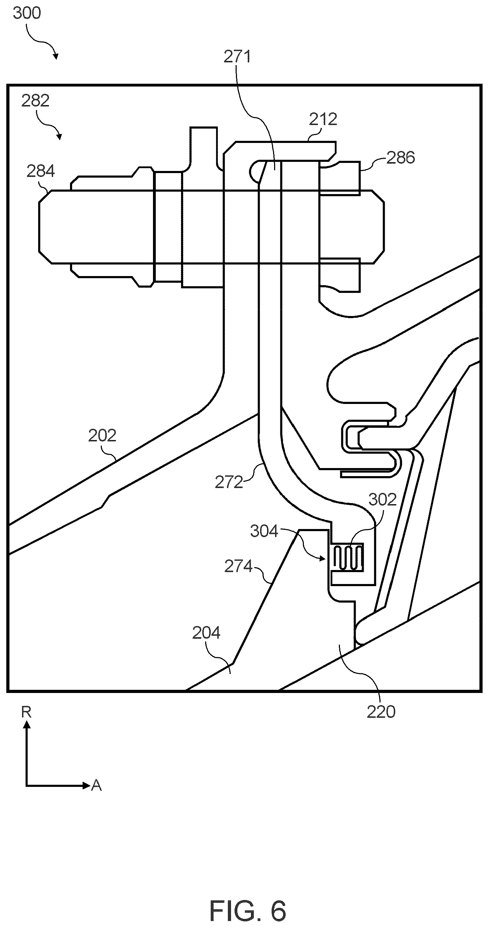

Now referring to FIG. 6, a magnified view of another second connector 300 is provided. The second connector 300 can be implemented as the second connector 236 of FIG. 2. The second connector 300 includes a reaction member 272, a joint 282, and W-seal 302. Specifically, the joint 282 connects the reaction member 272 to the outer frame 202, and the reaction member 272 defines a gap 304 with the aft end 220 of the outer fairing 204. The reaction member 272 resists movement of the outer fairing 204 aft in the axial direction A. The W-seal 302 is disposed in the gap 304 to reduce or inhibit air from the flowpath 226 (FIG. 2) from reaching the outer frame 202. To address space constraints, the second connector 300 may omit structures that reduce or inhibit movement of the outer fairing 204 forward in the axial direction A. In such a form, the second connector 300 provides both a sealing function and a reaction function for the outer fairing 204.

Further aspects are provided by the subject matter of the following clauses:
A turbine vane frame assembly defining an axial direction and a radial direction, the turbine vane frame assembly including an outer frame extending from a forward end to an aft end, the outer frame including a first connector at the forward end and a second connector at the aft end, an outer fairing extending from a forward end to an aft end, the outer fairing connected to the outer frame by the first connector and the second connector, an inner frame extending from a forward end to an aft end, the inner frame including a third connector at the forward end and a fourth connector at the aft end, and an inner fairing extending from a forward end to an aft end, the inner fairing connected to the inner frame by the third connector and the fourth connector, wherein the first connector provides support in the circumferential direction to the outer fairing, the second connector provides support in the axial direction to the outer fairing, and the fourth connector provides support in both the circumferential direction and axial direction to the inner fairing.

A turbine vane frame assembly defining an axial direction, a radial direction, and a circumferential direction, the turbine vane frame assembly comprising: an outer frame extending from a forward end to an aft end, the outer frame including a first connector at the forward end and a second connector at the aft end; an outer fairing extending from a forward end to an aft end, the outer fairing connected to the outer frame by the first connector and the second connector; an inner frame extending from a forward end to an aft end, the inner frame including a third connector at the forward end and a fourth connector at the aft end; and an inner fairing extending from a forward end to an aft end, the inner fairing connected to the inner frame by the third connector and the fourth connector, wherein the first connector provides support in the circumferential direction to the outer fairing, the second connector provides support in the axial direction to the outer fairing, and the fourth connector provides support in both the circumferential direction and axial direction to the inner fairing.

The turbine vane frame assembly of any of the preceding clauses, wherein the third connector allows for movement of the inner fairing relative to the inner frame in the axial direction and in the radial direction.

The turbine vane frame assembly of any of the preceding clauses, wherein the first connector includes a W-seal extending from the forward end of the outer frame to the forward end of the outer fairing.

The turbine vane frame assembly of any of the preceding clauses, wherein the second connector includes at least one of a leaf seal, a reaction member, a braided rope seal, a piston ring seal, or a W-seal.

The turbine vane frame assembly of any of the preceding clauses, wherein the second connector includes the leaf seal and the reaction member, wherein the outer fairing includes a tab at the aft end of the outer fairing, the tab engaging the leaf seal and the reaction member.

The turbine vane frame assembly of any of the preceding clauses, wherein the tab includes a forward face and an aft face, wherein the leaf seal engages the forward face, and wherein the reaction member engages the aft face.

The turbine vane frame assembly of any of the preceding clauses, wherein the third connector includes a leaf seal extending from the forward end of the inner frame to the forward end of the inner fairing.

The turbine vane frame assembly of any of the preceding clauses, wherein the fourth connector includes at least one of a bolted joint or a W-seal, wherein the fourth connector extends from the aft end of the inner frame to the aft end of the inner fairing.

The turbine vane frame assembly of any of the preceding clauses, wherein the outer frame and the inner frame are formed of a metal material.

The turbine vane frame assembly of any of the preceding clauses, wherein the outer fairing and the inner fairing are formed of a composite material.

The turbine vane frame assembly of any of the preceding clauses, further including an airfoil extending between the outer fairing and the inner fairing.

The turbine vane frame assembly of any of the preceding clauses, wherein the airfoil is formed of a composite material, wherein the outer fairing and the inner fairing define a flowpath, and wherein the airfoil is positioned within the flowpath.

The turbine vane frame assembly of any of the preceding clauses, wherein the airfoil is integral with the outer fairing and the inner fairing.

The turbine vane frame assembly of any of the preceding clauses, further including a structural extension coupled to the outer frame and the inner frame and extending through the airfoil.

The turbine vane frame assembly of any of the preceding clauses, wherein the structural extension is formed of a metal material.

The turbine vane frame assembly of any of the preceding clauses, wherein the composite material is a ceramic matrix composite (CMC).

The turbine vane frame assembly of any of the preceding clauses, further defining an assembly centerline between the outer fairing and the inner fairing, wherein the assembly centerline extends from a first end to a second end, the second end being outward in the radial direction of the first end.

The turbine vane frame assembly of any of the preceding clauses, wherein the second connector is adjacent to a low pressure turbine.

The turbine vane frame assembly of any of the preceding clauses, wherein the fourth connector is adjacent to a low pressure turbine.

The turbine vane frame assembly of any of the preceding clauses, wherein the first connector is adjacent to a high pressure turbine.

The turbine vane frame assembly of any of the preceding clauses, wherein the third connector is adjacent to a high pressure turbine.

An assembly for a gas turbine engine defining an axial direction and a radial direction, the assembly including a high pressure turbine, a low pressure turbine, and a turbine vane frame assembly of any of the preceding clauses, wherein the first connector is adjacent to the high pressure turbine, wherein the second connector is adjacent to the low pressure turbine, wherein the third connector is adjacent to the high pressure turbine, and wherein the fourth connector is adjacent to the low pressure turbine.

This written description uses examples to disclose the present disclosure, including the best mode, and also to enable any person skilled in the art to practice the disclosure, including making and using any devices or systems and performing any incorporated methods. The patentable scope of the disclosure is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

## Claims

1. A turbine vane frame assembly (200) defining an axial direction, a radial direction, and a circumferential direction, the turbine vane frame assembly (200) comprising:
an outer frame (202) extending from a forward end to an aft end (106, 212, 216, 220, 224), the outer frame (202) including a first connector (234) at the forward end and a second connector (236, 280, 290, 300) at the aft end (106, 212, 216, 220, 224);
an outer fairing (204) extending from a forward end to an aft end (106, 212, 216, 220, 224), the outer fairing (204) connected to the outer frame (202) by the first connector (234) and the second connector (236, 280, 290, 300);
an inner frame (204, 206) extending from a forward end to an aft end (106, 212, 216, 220, 224), the inner frame (204, 206) including a third connector (238) at the forward end and a fourth connector (240) at the aft end (106, 212, 216, 220, 224); and
an inner fairing (208) extending from a forward end to an aft end (106, 212, 216, 220, 224), the inner fairing (208) connected to the inner frame (204, 206) by the third connector (238) and the fourth connector (240),
wherein the first connector (234) provides support in the circumferential direction to the outer fairing (204), the second connector (236, 280, 290, 300) provides support in the axial direction to the outer fairing (204), and the fourth connector (240) provides support in both the circumferential direction and axial direction to the inner fairing (208).

2. The turbine vane frame assembly (200) of claim 1, wherein the third connector (238) allows for movement of the inner fairing (208) relative to the inner frame (204, 206) in the axial direction and in the radial direction.

3. The turbine vane frame assembly (200) of any of the preceding claims, wherein the first connector (234) includes a W-seal extending from the forward end of the outer frame (202) to the forward end of the outer fairing (204).

4. The turbine vane frame assembly (200) of any of the preceding claims, wherein the second connector (236, 280, 290, 300) includes at least one of a leaf seal (254, 270), a reaction member (272), a braided rope seal, a piston ring seal (292), or a W-seal.

5. The turbine vane frame assembly (200) of any of the preceding claims, wherein the second connector (236, 280, 290, 300) includes the leaf seal (254, 270) and the reaction member (272), wherein the outer fairing (204) includes a tab (274) at the aft end (106, 212, 216, 220, 224) of the outer fairing (204), the tab (274) engaging the leaf seal (254, 270) and the reaction member (272).

6. The turbine vane frame assembly (200) of any of the preceding claims, wherein the tab (274) includes a forward face and an aft face (278), wherein the leaf seal (254, 270) engages the forward face, and wherein the reaction member (272) engages the aft face (278).

7. The turbine vane frame assembly (200) of any of the preceding claims, wherein the third connector (238) includes a leaf seal (254, 270) extending from the forward end of the inner frame (204, 206) to the forward end of the inner fairing (208).

8. The turbine vane frame assembly (200) of any of the preceding claims, wherein the fourth connector (240) includes at least one of a bolted joint (244, 252, 258, 282) or a W-seal, wherein the fourth connector (240) extends from the aft end (106, 212, 216, 220, 224) of the inner frame (204, 206) to the aft end (106, 212, 216, 220, 224) of the inner fairing (208).

9. The turbine vane frame assembly (200) of any of the preceding claims, wherein the outer frame (202) and the inner frame (204, 206) are formed of a metal material.

10. The turbine vane frame assembly (200) of any of the preceding claims, wherein the outer fairing (204) and the inner fairing (208) are formed of a composite material.

11. The turbine vane frame assembly (200) of any of the preceding claims, further comprising an airfoil (264) extending between the outer fairing (204) and the inner fairing (208).

12. The turbine vane frame assembly (200) of any of the preceding claims, wherein the airfoil (264) is formed of a composite material, wherein the outer fairing (204) and the inner fairing (208) define a flowpath (226), and wherein the airfoil (264) is positioned within the flowpath (226).

13. The turbine vane frame assembly (200) of any of the preceding claims, wherein the airfoil (264) is integral with the outer fairing (204) and the inner fairing (208).

14. The turbine vane frame assembly (200) of any of the preceding claims, further comprising a structural extension (266) coupled to the outer frame (202) and the inner frame (204, 206) and extending through the airfoil (264).

15. The turbine vane frame assembly (200) of any of the preceding claims, wherein the structural extension (266) is formed of a metal material.
